# EUROPEAN PATENT APPLICATION

(11) **EP 4 794 442 A1**
(43) Date of publication of application: **19.08.2026**
(21) Application number: 26156791.1
(22) Date of filing: 06.02.2026
(51) Int. Cl.: H04W 76/10, H04W 76/27, H04W 36/00, G06N 20/00, H04W 24/02

(54) **FINE-TUNING LANGUAGE MODEL FOR PROCESSING RADIO RESOURCE CONTROL MESSAGES**

(30) Priority: 13.02.2025 FI 20255121
(71) Applicant: Nokia Solutions and Networks Oy, 02610 Espoo (FI)
(72) Inventor: LIU, Ziming, Changsha (CN); LIU, Bryan, Massy (FR); VALCARCE RIAL, Alvaro, Massy (FR)
(74) Representative: Nokia EPO representatives

(57) **Abstract**

Disclosed is a method comprising collecting (401, 502) a labelled dataset (324) for fine-tuning a machine-learning-based language model (322), wherein the labelled dataset (324) comprises multiple pairs of uplink radio resource control messages and corresponding downlink radio resource control messages; and fine-tuning (402, 603) the machine-learning-based language model (322) based on the labelled dataset (324) for processing the uplink radio resource control messages and generating the corresponding downlink radio resource control messages.

## Description

### FIELD

The following example embodiments relate to wireless communication and to machine learning.

### BACKGROUND

In a radio access network, the radio resource control (RRC) layer manages signaling tasks between a base station and user equipment, including connection setups, handovers, and system configuration.

### SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided a method comprising: collecting a labelled dataset for fine-tuning a machine-learning-based language model, wherein the labelled dataset comprises multiple pairs of uplink radio resource control messages and corresponding downlink radio resource control messages; and fine-tuning the machine-learning-based language model based on the labelled dataset for processing the uplink radio resource control messages and generating the corresponding downlink radio resource control messages.

According to a second aspect, there is provided the method of the first aspect, wherein the corresponding downlink radio resource control messages are related to at least one of: a connection setup, a handover, or a radio resource control state transition.

According to a third aspect, there is provided the method of any preceding aspect, wherein the collection of the labelled dataset comprises: extracting one or more fields from each radio resource control message of the uplink radio resource control messages and the corresponding downlink radio resource control messages; linearizing the one or more fields into a textual representation indicative of a meaning of the radio resource control message; and constructing a sequence of tokens suitable for processing by the machine-learning-based language model, wherein the sequence of tokens is constructed by tokenizing the textual representation using a byte pair encoding tokenizer.

According to a fourth aspect, there is provided the method of any preceding aspect, wherein the fine-tuning of the machine-learning-based language model is further based on one or more messages from a core network.

According to a fifth aspect, there is provided the method of any preceding aspect, further comprising: providing one or more uplink radio resource control messages as an input to the machine-learning-based language model after the fine-tuning; and receiving one or more downlink radio resource control messages as an output from the machine-learning-based language model based on the one or more uplink radio resource control messages.

According to a sixth aspect, there is provided the method of the fifth aspect, further comprising: evaluating a performance of the machine-learning-based language model by comparing the one or more uplink radio resource control messages to the uplink radio resource control messages comprised in the labelled dataset used for the fine-tuning of the machine-learning-based language model.

According to a seventh aspect, there is provided the method of any preceding aspect, further comprising: refining the machine-learning-based language model after the fine-tuning for optimizing downlink radio resource control messages generated by the machine-learning-based language model, wherein the refinement is performed by using a reinforcement learning algorithm for the optimization, and a reward model configured to assign one or more rewards for guiding the reinforcement learning algorithm.

According to an eighth aspect, there is provided the method of the seventh aspect, wherein the one or more rewards represent a similarity score between an output generated by the machine-learning-based language model, and a ground-truth token, wherein the ground-truth token represents a correct downlink radio resource control message.

According to a ninth aspect, there is provided the method of the seventh aspect, wherein the one or more rewards are related to at least one of: a successful connection rate, an average cell throughput, a latency, a packet loss rate, a handover success ratio, a time duration taken by the machine-learning-based language model for generating an output message, a time duration taken by a user device to process a received message and prepare a response, or a time duration for receiving the response from the user device.

According to a tenth aspect, there is provided the method of any of the seventh to ninth aspects, wherein the refinement further comprises using a Kullback-Leibler divergence penalty component for maintaining stability of the machine-learning-based language model during the refinement.

According to an eleventh aspect, there is provided the method of any of the seventh to tenth aspects, further comprising: deploying the machine-learning-based language model to a radio access network node for processing radio resource control messages after the refinement is completed.

According to a twelfth aspect, there is provided a method comprising: receiving an uplink radio resource control message from a user device; providing the uplink radio resource control message as an input to a machine-learning-based language model that is fine-tuned for processing uplink radio resource control messages and generating corresponding downlink radio resource control messages; receiving a downlink radio resource control message as an output from the machine-learning-based language model based on the uplink radio resource control message; and transmitting the downlink radio resource control message to the user device as a response to the uplink radio resource control message.

According to a thirteenth aspect, there is provided an apparatus comprising means for causing the apparatus to perform at least the method of any of the first to eleventh aspects.

According to a fourteenth aspect, there is provided an apparatus comprising means for causing the apparatus to perform at least the method of the twelfth aspect.

According to a fifteenth aspect, there is provided an apparatus comprising at least one processor, and at least one memory storing instructions that, when executed by the at least one processor, cause the apparatus to perform at least the method of any of the first to eleventh aspects.

According to a sixteenth aspect, there is provided an apparatus comprising at least one processor, and at least one memory storing instructions that, when executed by the at least one processor, cause the apparatus to perform at least the method of the twelfth aspect.

According to a seventeenth aspect, there is provided a computer program comprising instructions which, when executed by an apparatus, cause the apparatus to perform at least the method of any of the first to eleventh aspects.

According to an eighteenth aspect, there is provided a computer program comprising instructions which, when executed by an apparatus, cause the apparatus to perform at least the method of the twelfth aspect.

According to a nineteenth aspect, there is provided a non-transitory computer readable medium comprising instructions which, when executed by an apparatus, cause the apparatus to perform at least the method of any of the first to eleventh aspects.

According to a twentieth aspect, there is provided a non-transitory computer readable medium comprising instructions which, when executed by an apparatus, cause the apparatus to perform at least the method of the twelfth aspect.

According to a twenty-first aspect, there is provided a computer readable medium comprising instructions stored thereon that, when executed by a processor, perform the method of any of the first to eleventh aspects.

According to a twenty-second aspect, there is provided a computer readable medium comprising instructions stored thereon that, when executed by a processor, perform the method of the twelfth aspect.

According to a twenty-third aspect, there is provided a system comprising at least one processor and at least one memory storing instructions that, when executed by the at least one processor, cause the system to perform at least the method of any of the first to eleventh aspects, and the method of the twelfth aspect.

### BRIEF DESCRIPTION OF THE DRAWINGS

In the following, various example embodiments will be described in greater detail with reference to the accompanying drawings, in which
FIG. 1 illustrates an example of a wireless communication network;
FIG. 2 illustrates an example of a system;
FIG. 3 illustrates a block diagram;
FIG. 4 illustrates a flow chart;
FIG. 5 illustrates a block diagram;
FIG. 6 illustrates a flow chart;
FIG. 7 illustrates a flow chart;
FIG. 8 illustrates a training and inference procedure of a language model;
FIG. 9 illustrates an example of a sentence similarity comparison;
FIG. 10 illustrates a flow chart;
FIG. 11 illustrates a distribution of similarity scores for an original language model (before fine-tuning) and a fine-tuned and refined language model;
FIG. 12 illustrates an example of an apparatus;
FIG. 13 illustrates an example of an apparatus;
FIG. 14 illustrates an example of an artificial neural network; and
FIG. 15 illustrates an example of a computational node.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Further, it should be appreciated that, as used herein, the terms "the at least one" and "the one or more" mean "any one of the at least one" and "any one of the one or more", respectively. Furthermore, as used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (i.e., 3GPP NR Rel-18 and beyond), sixth generation (6G), or seventh generation (7G). Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

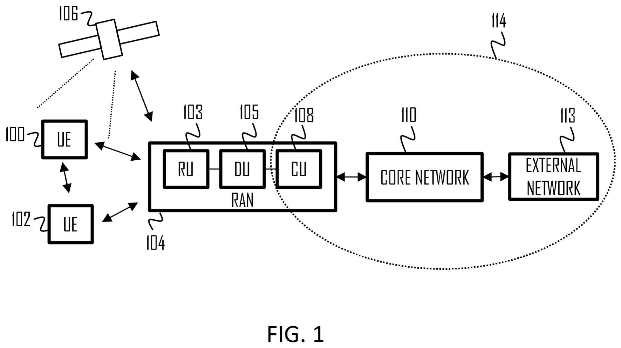

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, a RAN node, or a network device.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and/or receiving control plane signaling and also for routing data from one access node to another access node.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a household appliance with radio parts, a sensor comprising a wireless modem, or a computing device comprising a wireless modem integrated in a vehicle or in a house.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) 103 comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) 103 of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, or low earth orbit (LEO) satellite systems, such as mega-constellations (i.e., systems in which hundreds of (nano)satellites are deployed). Alternatively, the satellites may be an airborne devices, such as an unmanned aerial vehicle (UAV), or a high-altitude platform system (HAPS). A given satellite 106 may provide communication services on Earth via one or more satellite beams. The one or more satellite beams create one or more cells over a given service area that may be bounded by the field of view of the satellite 106.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug- and-play" access nodes may be introduced. A radio access network, which may be able to use "plug-and- play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

In the RAN, the RRC layer manages signaling tasks between the base station (e.g., gNB) 104 and UEs 100, 102, including connection setups, handovers, and system configuration. 5G NR RRC functions are primarily located within the CU Control Plane (CU-CP). However, current RRC techniques rely on rule-based systems and manual configurations, which, although robust, are suboptimal and incur high signaling overhead.

Large Language Models (LLMs) are advanced machine learning models capable of understanding and generating human-like text based on patterns learned from vast datasets. LLMs excel in pattern recognition and handling of incomplete data, making them suitable for complex tasks that involve interpreting and generating protocol messages. Compared to other deep learning approaches, LLMs have the advantage of generating reasonable outputs without requiring task-specific model design and training, since LLMs are already pre-trained on extensive datasets. This makes LLMs versatile, general-purpose solvers capable of finding optimal solutions across a wide range of optimization problems, making them highly adaptable to different environments. Some examples of LLMs include the Large Language Model Meta Al (Llama) and Bidirectional Encoder Representations from Transformers (BERT).

Llama is open source, providing access to model weights. The Llama models are small in size, ranging from 7 billion to 405 billion parameters, making them accessible for research purposes and suitable for developing task-specific LLMs for mission-critical applications.

BERT is a foundational model in natural language processing (NLP), which excels in tasks like sentence classification and pairing, but struggles with creating effective sentence embeddings. This limitation is addressed by Sentence-BERT (S-BERT), which enhances BERT by incorporating a pooling step that transforms outputs into consistent, meaningful sentence embeddings. Unlike BERT's cross-encoder, which is resource-intensive, S-BERT uses a faster Bi-Encoder based on Siamese Networks. This allows it to map sentences into a vector space, capturing deeper semantic meanings and making it ideal for tasks requiring semantic similarity.

However, these general-purpose LLMs lack specialized RRC knowledge, and it seems that the application of LLMs to RRC remains relatively unexplored. Thus, there is a challenge in how to endow LLMs with the expertise needed to digest and act upon RRC messages, and how to integrate the LLM into the radio protocol stack (e.g., in 5G NR) for both training and inference. Successfully achieving this integration may require careful design in the interfaces between the LLM-based RRC and the rest of the stack.

Some example embodiments may leverage an LLM (or other machine-learning-based language model) in the context of RRC message processing. The LLM may be fine-tuned on RRC-specific data, to interpret, analyze, and respond to complex RRC messages in real time. In other words, a pre-trained LLM may be fine-tuned with RRC-specific datasets to allow for precise management of control-plane messages, such as connection setups, handovers, and resource reconfigurations. The LLM-based approach reduces manual intervention, scales effectively across varying network sizes, and ensures consistency across control and user planes, ultimately improving network performance.

The fine-tuned LLM may then be integrated in a wireless communication network to automate and optimize RRC processes. For example, the RRC layer at the base station may be replaced by the LLM fine-tuned for RRC tasks. In this way, it is possible to automate the analysis of protocol traces and respond to RRC messages in real-time, thereby improving network efficiency and reducing redundancy.

Supervised fine-tuning (SFT) is a machine learning technique where a pre-trained LLM is further trained on a specific dataset to adapt it to a particular domain or task. In some example embodiments, the fine-tuning may involve training an LLM (or other machine-learning-based language model) on RRC message datasets specific to wireless communication networks (e.g., 5G networks). This process enables the LLM to understand the specialized terminology and structures inherent in RRC communications, which are not covered in general language models. Fine-tuning enhances the LLM's ability to handle domain-specific tasks, improving accuracy and efficiency in RRC message processing.

In other words, in some example embodiments, pre-trained general-purpose LLMs may be fine-tuned using RRC-specific traces in a supervised learning fashion, enabling them to understand the specialized language and structures of RRC exchanges. Open-source LLMs are rather ignorant of RRC dynamics, and the fine-tuning is intended to improve the LLM's performance on RRC tasks. This process allows the model to rapidly generate appropriate responses and handle the intricate messaging patterns found in RRC protocols.

For performance-driven alignment of the LLMs using reinforcement learning, the LLM's behavior may be further refined (or aligned) to improve its performance on RRC tasks learned during the fine-tuning. This can be achieved through reinforcement learning techniques, such as Proximal Policy Optimization (PPO). This technique may use an automated reward mechanism based on sentence similarity metrics to optimize the model's performance without human intervention.

PPO is a reinforcement learning algorithm that balances exploration and exploitation by optimizing a policy within a trust region. The advantages of PPO include stability and efficiency in training complex models. In some example embodiments, such a reinforcement learning framework may be used to align the fine-tuned LLM more closely with the base station's response behavior, potentially resulting in concise responses by the LLM that can improve the successful connection rate.

By combining fine-tuning and reinforcement learning, the LLM can recognize patterns in RRC messages, predict communication behaviors, and optimize resource allocation. Additionally, the LLM can infer missing information in RRC messages, improving connection success rates, even when critical fields are absent. Furthermore, the LLM can detect and eliminate redundant information within RRC traces, reducing latency and improving real-time network performance. Moreover, the model's responses can be aligned with base station behaviors, enhancing compatibility and reliability.

The system also efficiently scales with increasing control-plane signaling and adapts dynamically to changing network conditions without requiring extensive manual reconfiguration. This ensures optimal performance as network demands evolve, overcoming the limitations of static RRC systems.

Some example embodiments are described below using principles and terminology of 5G radio access technology without limiting the example embodiments to 5G radio access technology, however.

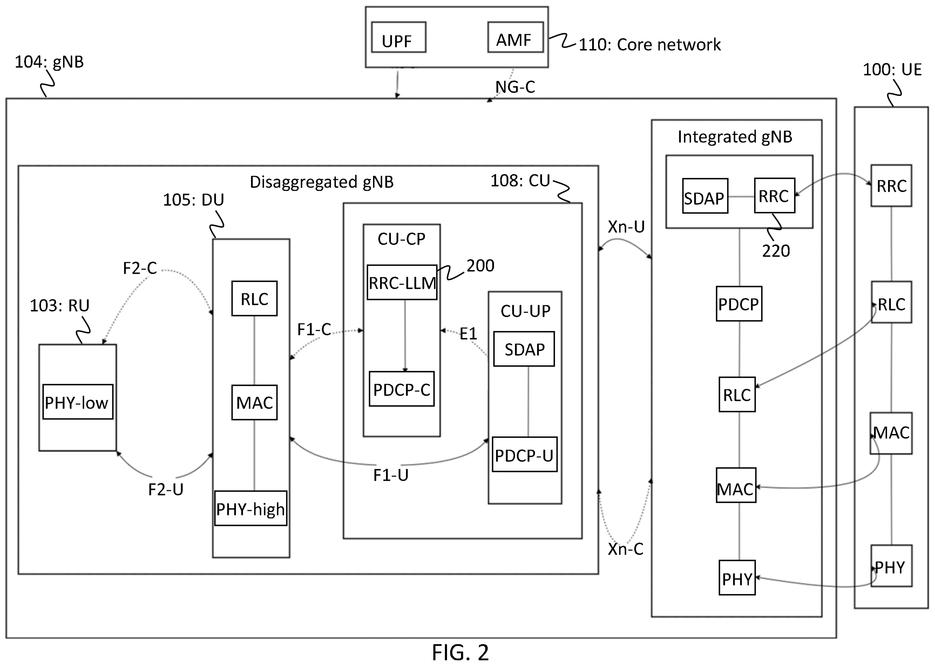

FIG. 2 illustrates an example embodiment of a system. More specifically, FIG. 2 illustrates an example architecture of an LLM-based RRC layer. In FIG. 2, a fine-tuned LLM 200 is embedded as the RRC layer of a gNB 104 to manage control-plane signaling between the gNB 104 and UE 100. By using an LLM to replace the RRC layer, decision-making, signalling efficiency, RRC trace debugging and network adaptability may be improved in real-time.

In FIG. 2, the RRC-LLM 200 is shown as embedded as the RRC layer in a CU 108 of a disaggregated gNB (i.e., a gNB with a CU-DU split architecture). However, the RRC-LLM 200 could alternatively be embedded as the RRC layer 220 of an integrated gNB (i.e., a monolithic gNB without a CU-DU split).

The RRC-LLM 200 is a management entity that oversees the RRC layer functions within the control plane of the CU 108. It handles tasks related to at least one of: connection setup, mobility, radio bearer management, security, paging, and/or Quality of Service (QoS).

The data flow within the LLM-based RRC layer 200 begins when the gNB 104 receives an uplink RRC message (e.g., RRCSetupRequest or RRCReconfigurationComplete) from the UE 100. The RRC-LLM 200 then processes this message to extract relevant features, such as signal strength indicators, user mobility context, and/or current network load. The signal strength indicators may comprise, for example, reference signal received power (RSRP) values and/or reference signal received quality (RSRQ) values.

Once extracted, the features are fed into the fine-tuned RRC-LLM 200, which has been trained (fine-tuned) on historical RRC data and network-specific scenarios. The RRC-LLM 200 analyzes the current context using its learned patterns and predicts the appropriate response, such as initiating a handover, changing some RRC settings, or setting up a new connection. The RRC-LLM 200 then generates the appropriate signaling response, which is executed by the control-plane components. For example, if a handover is required, the RRC-LLM 200 instructs the DU 105 to prepare the target cell, while coordinating with the CU-UP to ensure that user data is seamlessly transferred.

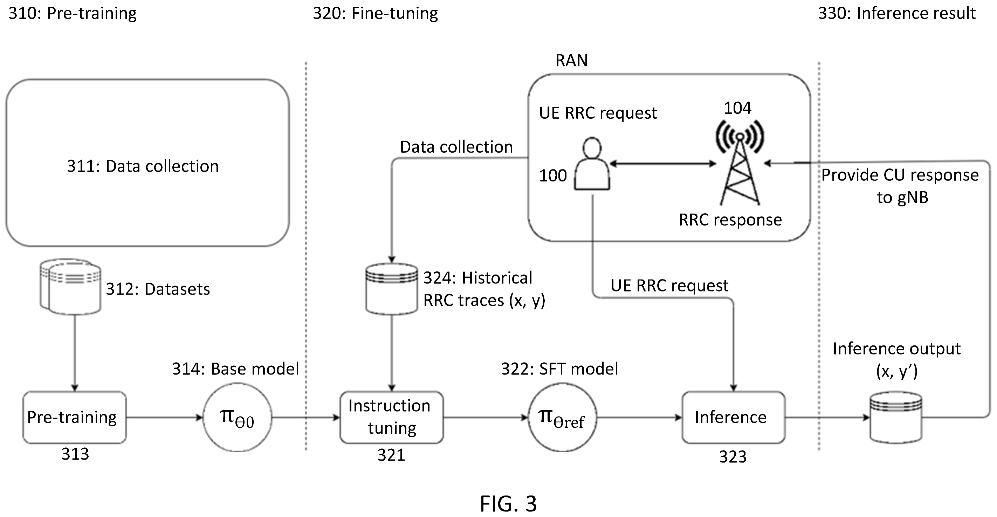

FIG. 3 illustrates a block diagram according to an example embodiment. FIG. 3 depicts the data flow for fine-tuning.

As shown in FIG. 3, the method for managing RRC connections using an LLM commences with data collection 311 in the pre-training phase 310. A diverse range of publicly available data 312 (e.g., including web pages, books, academic papers, and code repositories) may be aggregated to pre-train 313 the base model (denoted as *π_{θ}*). In other words, large datasets may be used for unsupervised learning. The pre-training phase 310 may be done by the creator of the LLM.

The fine-tuning phase 320 may be performed at a base station (e.g., gNB) 104 or CU 108, or at any other computing device. During the fine-tuning phase 320 (instruction tuning phase), the pre-trained LLM model 310 is fine-tuned 321 for specific tasks related to RRC. The tasks may be defined from RRC protocol traces and can be improved and redefined according to the needs of the project in the later development stage of the project. For example, field test RRC traces 324 collected from base stations may be utilized, which may include scenarios with multiple device connections. RRC traces are logs or records of the communication and signaling messages exchanged between a UE 100 and the base station 104 using the RRC protocol. These traces help to understand and analyze the behavior and performance of the mobile network.

However, these traces cannot be used directly for LLM training, as they also contain non-RRC related entries, such as those related to the AMF. Consequently, the data may be processed and reorganized to extract the relevant RRC messages. An example of a part of an RRC session extracted from a field test is presented in the following: NR-RRC:rrcSetupRequest, NR-RRC:rrcSetup, NR-RRC:rrcSetupComplete, NRRRC:securityModeCommand, NR-RRC:securityModeComplete, NR-RRC:rrcReconfiguration, NRRRC:rrcReconfigurationComplete, NR-RRC:measurementReport, NR-RRC:rrcReconfiguration, NRRRC:rrcReconfigurationComplete, NR-RRC:measurementReport, NR-RRC:rrcRelease.

The data 324 may be categorized or labelled into two types: the uplink RRC messages or requests (denoted as x) received by the base station 104, and the corresponding downlink RRC response messages (denoted as y) transmitted by the base station 104. This categorized data 324 forms a labelled dataset. The goal of the fine-tuning process is for the fine-tuned LLM model 322 (RRC-LLM) to produce the correct downlink RRC reply in response to a received uplink RRC request. This process allowed to fine-tune the model to handle complex wireless communication environments better. The fine-tuned LLM model 322 is denoted as *π_{θref}* herein.

In FIG. 3, *θ* denotes the set of all learnable parameters in the language model (e.g., the set of weights and biases across all layers of the model that are adjusted during the fine-tuning or training process).

*θ*₀ represents the parameters of the pre-trained base model 314 (*π_{θ}*), before any fine-tuning. These are the initial parameters obtained after pre-training on large-scale unlabeled data.

*θ_{ref}* denotes the parameters of the supervised fine-tuned model 322 (*π_{θref}*). These parameters are derived from the base model 314 (*π*_{θ0}). However, these parameters have been updated through supervised fine-tuning on the labelled dataset 324 to perform a specific task better.

To facilitate instruction fine-tuning, a one-question-one-answer labelled dataset 324 may be used, wherein the question corresponds to the uplink RRC message input and the answer corresponds to the downlink RRC message output label. However, in the original traces, request-reply pairs may be interleaved due to chronological logging, and multiple RRC procedures may overlap. To address this, UE-specific signaling exchanges may be extracted by isolating one RRC procedure at a time. By filtering out AMF-related messages and consolidating the RRC messages, the dataset may be reorganized to meet the one-question-one-answer standard. Specifically, all received uplink RRC messages within a session may be classified as a consolidated request, and all replied downlink RRC messages may be classified as a consolidated response.

For example, the RRC request-reply to exchanges may be modelled as Question Answering (QA) tasks. To do this, consider the following conditional probability distribution *P*( *Y* | *X* ) between the requests and the replies: $P \left(\left.Y\right|X;θ\right) = {\prod }_{t = 1}^{T} P \left(\left.{y}_{t}\right|{y}_{< t},X;θ\right)$

By modeling *P*( *Y* | *X*) , the model directly incorporates the input *X* into the generation process, allowing for outputs that are contextually relevant.

In the supervised fine-tuning process, the SFT model 322 (π_{θ_{ref}}) estimates this conditional probability distribution, enabling it to produce outputs *Y* conditioned on inputs *X* , effectively capturing the relationships present in the supervised dataset.

Additional messages from the core network 110 may also be appended as context to the LLM inputs. Historical RRC exchanges may also be appended, which enriches the model's contextual understanding.

In the inference phase 323, the fine-tuned LLM model 322 predicts downlink RRC replies (i.e., downlink RRC messages). For evaluation, the fine-tuned LLM model 322 may be tested using uplink RRC requests (x) from the same scenario and comparing the downlink RRC responses (y') generated by the fine-tuned LLM model 322 with the actual (real) base station responses (y). This comparison helps to assess the accuracy and performance of the fine-tuned LLM model 322 in real-world conditions.

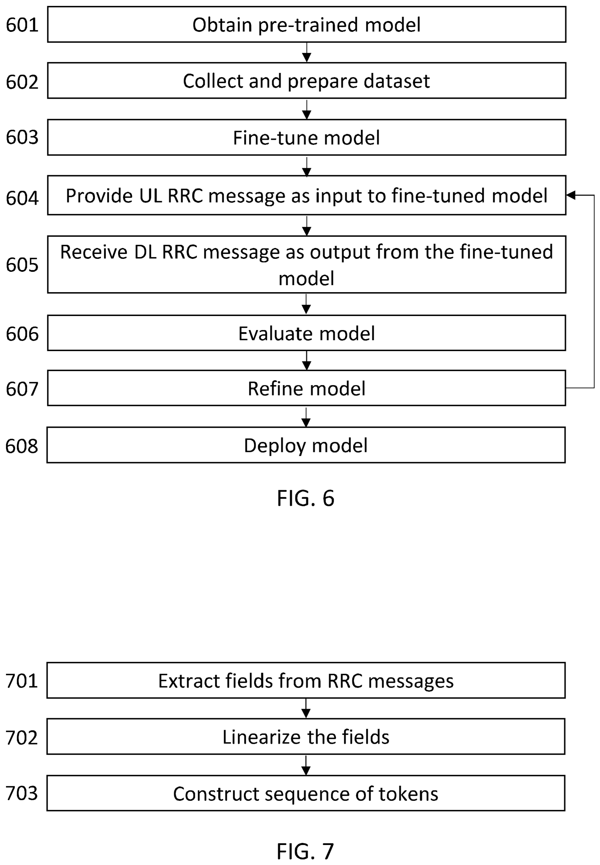

Regarding the loss function, in generative models, causal language modeling may be used, that is, comparing the cross-entropy loss with the previous text. In SFT, the cross-entropy loss of the output may be compared with the labels. The cross-entropy loss function quantifies the divergence between the predicted probabilities and the actual target tokens over a dataset $D = {\left\{\left({X}^{\left(i\right)}, {Y}^{\left(i\right)}\right)\right\}}_{i = 1}^{N}$: $L \left({θ}_{ref}\right) = - \frac{1}{N} {\sum }_{i = 1}^{N} {\sum }_{t = 1}^{{T}^{\left(i\right)}} log P \left(\left.{y}_{t}^{\left(i\right)}\right|{y}_{< t}^{\left(i\right)},{X}^{\left(i\right)};{θ}_{ref}\right)$ where *N* is the total number of samples, *T⁽ⁱ⁾* is the length of the i^{th} sequence, ${y}_{t}^{\left(i\right)}$ is the t^{th} target of the ground-truth token (true label), and ${y}_{< t}^{\left(i\right)}$ denotes the previous targets. The probabilities may be calculated over byte pair encoding (BPE) tokens (e.g., see FIG. 7 and the related description). This loss function encourages the model to produce outputs that closely match the target labels by minimizing the negative log-likelihood of the correct tokens.

It should be noted that FIG. 3 only illustrates the data flow within the system, showing the progression from data collection to inference. It does not reflect the optimization techniques that may be applied during the fine-tuning process. The focus in FIG. 3 is on the flow of information and the stages involved in training and inference using the LLM for RRC management.

In an alternative approach, retrieval-augmented generation (RAG) may be used to collect missing information, since RRC replies require additional information and context beyond what is included in the RRC request. However, this may be slow and inadequate for the RRC latency requirements. Thus, it may be beneficial to leverage an LLM's reasoning abilities to generate optimal RRC responses based on a dynamic radio context, which can be provided in the prompt. The reliance on static context, such as subscriber information, is minimal and infrequent for this purpose. RAG would also add retrieval latency and increase complexity due to the careful design needed to build the queries.

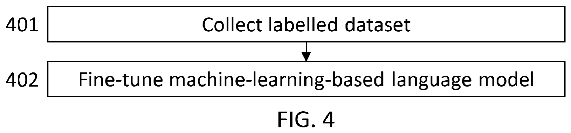

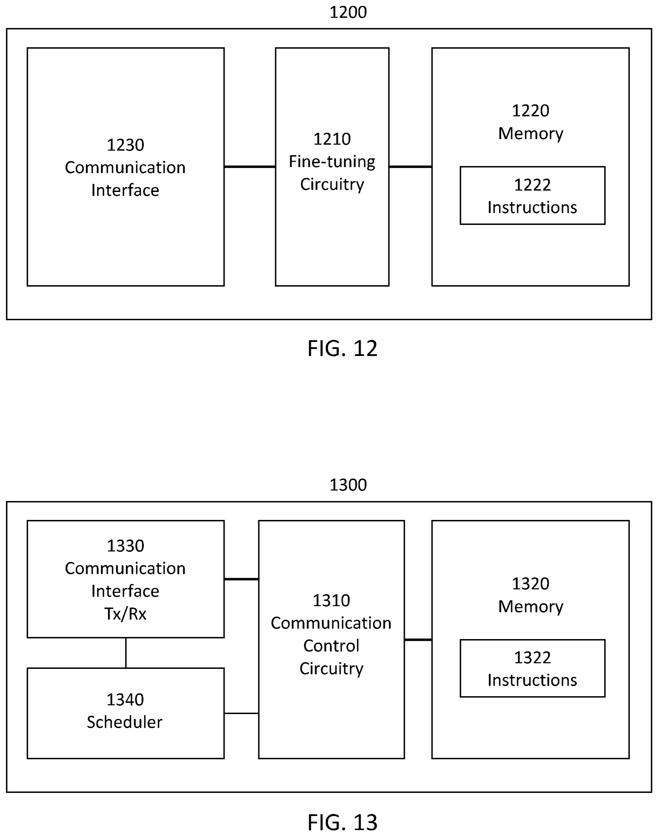

FIG. 4 illustrates a flow chart according to an example embodiment of a method (e.g., a computer-implemented method) for fine-tuning a machine-learning-based language model for processing RRC messages. The method of FIG. 4 may be performed by an apparatus 1200 depicted in FIG. 12, or by an apparatus 1300 depicted in FIG. 13.

Referring to FIG. 4, in block 401, a labelled dataset is collected for fine-tuning a pre-trained machine-learning-based language model. A machine-learning-based language model is a type of artificial intelligence that uses one or more algorithms to understand and generate language understandable by a human. The machine-learning-based language model may be pre-trained to predict the likelihood of a sequence of words, enabling it to perform tasks such as text generation.

For example, the machine-learning-based language model may comprise a pre-trained large language model (e.g., the pre-trained large language model 314 described above). Alternatively, the machine-learning-based language model may comprise any other machine-learning-based language model (i.e., it does not necessarily have to be large).

The labelled dataset comprises multiple pairs of uplink radio resource control messages and corresponding downlink radio resource control messages. For example, the labelled dataset may comprise the RRC traces 324 as described above.

The labelled dataset refers to data that includes labels or tags indicating the prediction targets for the model. These labels may be used to train or fine-tune the model to recognize patterns or correlations between uplink RRC messages and the corresponding downlink RRC messages. Training or fine-tuning the model by using labels is called supervised learning.

The corresponding downlink radio resource control messages may be related to at least one of: connection management (e.g., establishing, maintaining or releasing a connection between a UE and a network), mobility management (e.g., a handover command or cell switch command to the UE), radio bearer management (e.g., setting up, reconfiguring, or releasing radio bearers for data transmission to or from the UE), paging (e.g., notifying the UE about incoming calls or data sessions), or a radio resource control state transition (e.g., for switching the UE between RRC_CONNECTED state, RRC_INACTIVE state, and RRC_IDLE state).

For example, the labelled dataset may comprise at least one of: a set of radio resource control setup request messages and a set of corresponding radio resource control setup messages, a set of radio resource control connection re-establishment requests and a set of corresponding radio resource control connection re-establishment messages, or a set of radio resource control measurement reports and a set of corresponding radio resource control reconfiguration messages. Alternatively, or additionally, any other RRC message pair(s) may be used (e.g., as listed in 3GPP TS 38.331).

In block 402, based on the labelled dataset, the machine-learning-based language model is fine-tuned for processing the uplink radio resource control messages and generating the corresponding downlink radio resource control messages. The fine-tuning of the machine-learning-based language model may be further based on one or more messages from a core network. The fine-tuned machine-learning-based language model may refer to the RRC-LLM 200 of FIG. 2 or the SFT model 322 of FIG. 3.

Fine-tuning a pre-trained model involves taking an existing model that has already been trained on a large dataset, and further training it on a smaller, task-specific dataset. This process adjusts the model's parameters to better suit the specific task (i.e., processing RRC messages in this case), improving its performance and accuracy for that particular application. Fine-tuning leverages the knowledge that the pre-trained model has already acquired previously, therefore being more efficient than training a model from scratch.

After the fine-tuning is completed, the machine-learning-based language model may be deployed or transmitted to a radio access network node (e.g., to a CU 108 or a base station 104) for processing radio resource control messages (e.g., for real-time RRC message processing).

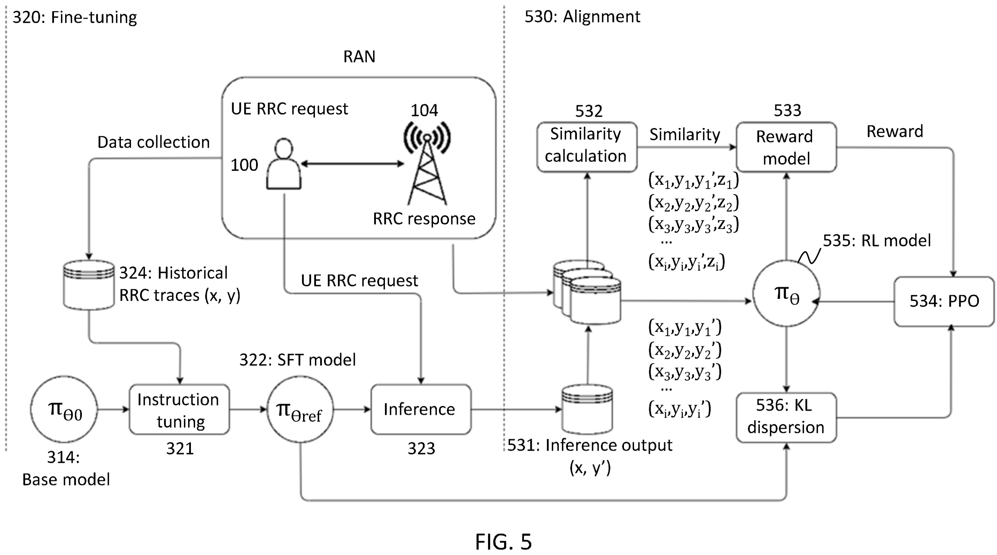

FIG. 5 illustrates a block diagram according to an example embodiment. FIG. 5 depicts a fine-tuning and reinforcement learning framework for RRC management.

In FIG. 5, the fine-tuning phase 320 corresponds to the fine-tuning phase 320 of FIG. 3. Data is first collected, including historical RRC traces 324, which are used for fine-tuning 321 (instruction-tuning) of the base model 314 (*π*_{*θ*0}) to produce the SFT model 322 (*π_{θref}*). The SFT model 322 then performs inference 323 to handle UE uplink RRC requests.

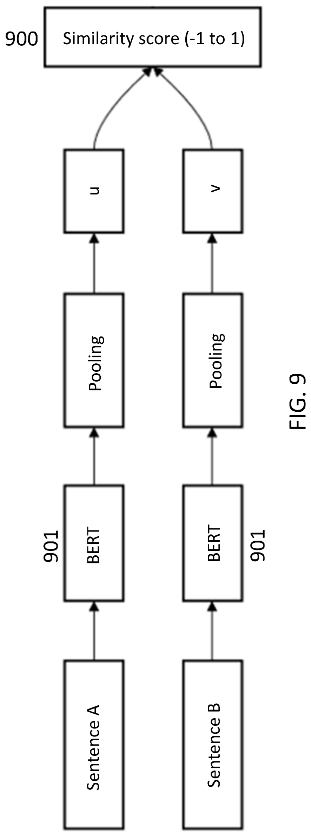

In the alignment phase 530, the inferred outputs 531 of the SFT model 322 are evaluated by comparing them with actual responses (i.e., correct downlink RRC messages) using similarity calculations 532 (e.g., see FIG. 9). A reward model 533 is used to assign rewards, further guiding proximal policy optimization (PPO) 534 to enhance the reinforcement learning (RL) model 535 (*π_{θ}*). The RL model 535 refers to the refined or optimized version of the SFT model 322 resulting from this reinforcement learning process. A Kullback-Leibler (KL) divergence component 536 may be used to ensure stability of the SFT model 322 during the optimization.

In other words, to enhance the policy π_{θ}, parameterized by θ, a reinforcement learning technique may be employed. The reward model 533 may be trained in a supervised manner utilizing a curated dataset, which, while not exhaustive of all possible input-output pairs (x, *y*), provides sufficient guidance. Post-training, this reward model 533 directs the reinforcement learning process to optimize the policy π_{θ}.

In order to fit the optimization goal, the value network and policy network may be defined as follows.

The policy network π_{θ} refers to the LLM that generates an output sentence *Y'*^{(*i*)} given an input sentence X^{(*i*)}.

The value network *V_{ϕ}* is a value function approximator parameterized by *ϕ*, estimating the expected reward for the state *X*^{(*i*)}.

In industrial scenarios, particularly within communication protocols like the RRC process, the quality and timeliness of generated responses may be critical. The reward function *R*^{(*i*)} may be designed to reflect the model's performance under two distinct conditions.

In the first option, when a ground-truth token *Y*^{(*i*)} is accessible from internal testing phases, the reward may be defined from the similarity between the generated output *Y'*^{(*i*)} and the ground-truth token *Y*^{(*i*)} (e.g., see FIG. 9). This can be done when RRC traces are available for the fine-tuning: ${R}^{\left(i\right)} = {z}^{\left(i\right)}$

Since *Z*^{(*i*)} ∈ [-1,1], the reward *R*^{(*i*)} represents the normalized similarity score.

The ground-truth token refers to the correct or true label assigned to a specific token in a dataset. Ground-truth tokens may be used as a reference for training and evaluating machine learning models. In this case, the ground-truth token refers to the correct version of the downlink RRC message as defined in the 3GPP specifications (e.g., in TS 38.331).

The second option may be applied in the absence of ground-truth tokens (i.e., if *Y*^{(*i*)} is not available). In operational environments where ground-truth tokens are unavailable, evaluation metrics derived from system performance can be used. Note that by adjusting the reward based on system performance, the LLM has the potential to generate new responses that improve the system performance, such as increasing the successful connection rate. The evaluation mechanism may involve monitoring the time it takes for the UE to respond after receiving the generated message *Y'(i).* This evaluation time, ${t}_{eval}^{\left(i\right)}$, serves as an implicit indicator of the quality and correctness of the generated response. For example, if the LLM-generated RRC reply is unintelligible or corrupt, the UE will fail to provide a sensible reply. Thus, using the delay in a UE reply may be used as a proxy for the validity of the LLM-generated response. This can be used in a live deployment of the LLM-based RRC layer, or even in a simulation. This is advantageous because this process does not require a labelled RRC dataset.

The evaluation time ${t}_{eval}^{\left(i\right)}$ is the elapsed time from when the base station transmits the generated RRC message *Y'(i)* to the UE until the next expected message is received from the UE. This duration may include at least one or all of the following: the generation time (i.e., the time taken by the model to generate the output message), UE processing time (i.e., the time the UE takes to process the received message and prepare a response), and/or response time (i.e., the time until the UE sends the next message back to the base station).

A short ${t}_{eval}^{\left(i\right)}$ indicates that the UE successfully processed the message and promptly responded, suggesting that the generated message *Y'(i)* was correct and complied with protocol standards.

On the other hand, a prolonged ${t}_{eval}^{\left(i\right)}$ may indicate that the UE encountered issues processing the message due to errors, omissions, or hallucinated fields in *Y'(i)* . This can lead to delays, retransmissions, or timeouts.

To produce a reward *R*^{(*i*)} that is a variable between -1 and 1, the reward may be defined based on the normalized time ratio: ${R}^{\left(i\right)} = 1 - 2 \left(\frac{{t}_{eval}^{\left(i\right)} - {t}_{min}}{{t}_{max} - {t}_{min}}\right)$

In the above equation, *t*ₘᵢₙ is the minimum expected evaluation time under optimal conditions, representing the best-case scenario where the UE processes and responds without any delay.

*t*ₘₐₓ is the maximum acceptable evaluation time, defined by protocol standards (e.g., the time after which the base station would trigger a retransmission or declare a timeout, as specified in 3GPP standards)
The above equation ensures that when ${t}_{eval}^{\left(i\right)} = {t}_{min}$, *R*⁽ⁱ⁾ = 1 (maximum reward), or when ${t}_{eval}^{\left(i\right)} = {t}_{max}$, *R*^{(*i*)} = -1 (minimum reward). For values in between, the reward decreases linearly as ${t}_{eval}^{\left(i\right)}$ increases.

By using ${t}_{eval}^{\left(i\right)}$ as a proxy for response quality, both the timeliness and correctness of the generated message can be accounted for. A correct message leads to expected UE behaviour and timely responses, whereas an incorrect message results in delays or failures in UE response. This technique enables to detect issues such as hallucinated fields, missing mandatory fields, or protocol violations in *Y'*^{(*i*)} without direct access to ground-truth tokens.

In an alternative approach, if a pre-trained evaluation model provides a score *S*^{(*i*)} in [-1, 1] reflecting the quality of *Y'*^{(*i*)}, it is possible to set: ${R}^{\left(i\right)} = {S}^{\left(i\right)}$

This alternative approach allows the reward function to adapt dynamically based on machine-generated feedback aligned with industrial operational requirements.

The KL divergence penalty 536 may be used to prevent the updated policy *π_{θ}* from deviating excessively from the reference policy *π*_{*θ*_{ref}}. This penalty ensures that policy updates remain within a controlled proximity to the original policy, maintaining system stability.

The PPO algorithm 534 may be employed to optimize the policy *π_{θ}.* PPO effectively balances the exploitation of learned behaviors with the exploration of new strategies by constraining policy updates within a pre-defined trust region. Concurrently, the value network *Vϕ* may be updated to accurately estimate expected rewards, minimizing the discrepancy between predicted and actual rewards.

The combined loss function integrates the PPO objective, value function loss, and an entropy bonus to encourage adequate exploration, with coefficients *c*₁ and *c*₂ weighting the respective contributions.

It should be noted that the PPO algorithm 534 is just one example of a reinforcement learning algorithm. Any other type of reinforcement learning algorithm may alternatively be used.

FIG. 6 illustrates a flow chart according to an example embodiment of a method (e.g., a computer-implemented method) for fine-tuning a machine-learning-based language model for processing RRC messages. The method of FIG. 6 may be performed by an apparatus 1200 depicted in FIG. 12, or by an apparatus 1300 depicted in FIG. 13.

The method of FIG. 6 involves obtaining a pre-trained machine-learning-based language model, preparing datasets by cleaning and structuring data, and conducting a single fine-tuning phase using supervised learning to adapt the model for specific tasks. Inference is performed to generate outputs, followed by evaluation to ensure accuracy and relevance. Alignment is conducted once in a controlled environment to optimize performance, avoiding live network risks and ensuring reliable deployment.

Referring to FIG. 6, in block 601, a pre-trained machine-learning-based language model (e.g., the base model 314 described above) is obtained to be used as the base model. For example, the pre-trained machine-learning-based model may be downloaded from the internet.

The pre-trained machine-learning-based language model may comprise, for example, a pre-trained large language model (e.g., the pre-trained large language model 314 described above). Alternatively, the machine-learning-based language model may comprise any other machine-learning-based language model (i.e., it does not necessarily have to be large).

In block 602, a labelled dataset is collected and prepared for fine-tuning the pre-trained machine-learning-based language model.

The labelled dataset comprises multiple pairs of uplink radio resource control messages and corresponding downlink radio resource control messages. For example, the labelled dataset may comprise the RRC traces 324 collected at the base station side as described above. The dataset may be prepared by parsing the traces. The traces may then be filtered, duplicates removed, and timestamps aligned. The data may be standardized, tokenized, and structured into question answering (QA) datasets for uplink RRC requests and downlink RRC responses.

The labelled dataset refers to data that includes labels or tags indicating the prediction targets for the model. These labels may be used to train or fine-tune the model to recognize patterns or correlations between uplink RRC messages and the corresponding downlink RRC messages. Training or fine-tuning the model by using labels is called supervised learning.

The corresponding downlink radio resource control messages may be related to at least one of: connection management (e.g., establishing, maintaining or releasing a connection between a UE and a network), mobility management (e.g., a handover command or cell switch command to the UE), radio bearer management (e.g., setting up, reconfiguring, or releasing radio bearers for data transmission to or from the UE), paging (e.g., notifying the UE about incoming calls or data sessions), or a radio resource control state transition (e.g., for switching the UE between RRC_CONNECTED state, RRC_INACTIVE state, and RRC_IDLE state).

For example, the labelled dataset may comprise at least one of: a set of radio resource control setup request messages and a set of corresponding radio resource control setup messages, a set of radio resource control connection re-establishment requests and a set of corresponding radio resource control connection re-establishment messages, or a set of radio resource control measurement reports and a set of corresponding radio resource control reconfiguration messages. Alternatively, or additionally, any other RRC message pair(s) may be used (e.g., as listed in 3GPP TS 38.331).

In block 603, based on the labelled dataset, the machine-learning-based language model is fine-tuned in a supervised learning manner for processing the uplink radio resource control messages and generating the corresponding downlink radio resource control messages. In other words, the pre-trained model is fine-tuned on RRC-specific data. The fine-tuning of the machine-learning-based language model may be further based on one or more messages from a core network. In the fine-tuning, the model is trained to process uplink requests and generate compliant downlink responses. The fine-tuned machine-learning-based language model may refer to the RRC-LLM 200 or the SFT model 322 described above.

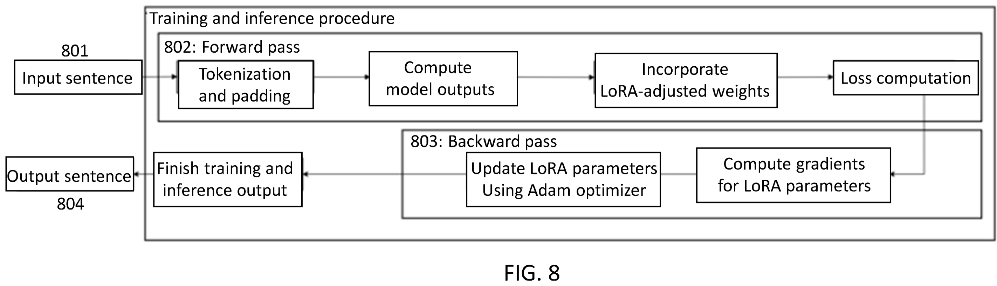

The fine-tuning may be performed using a loss function based on a similarity score (e.g., see FIG. 9). This way, the model learns to process uplink requests and generate 3GPP-compliant downlink replies. A low-rank adaptation (LoRa) technique may be used to speed-up the fine tuning (e.g., see FIG. 8). The fine-tuning phase teaches the model to handle diverse RRC procedures (e.g., including connection setup, handover, and/or state transitions). The result is a new model specialized on RRC.

In block 604, one or more uplink radio resource control messages are provided as an input to the machine-learning-based language model after the fine-tuning.

In block 605, one or more downlink radio resource control messages are received as an output from the machine-learning-based language model based on the one or more uplink radio resource control messages.

In other words, blocks 604 and 605 refer to the inference, where the fine-tuned model processes new uplink RRC requests and generates downlink RRC replies (response messages).

In block 606, the performance of the machine-learning-based language model is evaluated by comparing the one or more uplink radio resource control messages to the uplink radio resource control messages comprised in the labelled dataset used for the fine-tuning of the machine-learning-based language model. For example, S-BERT may be used to evaluate the quality of the generated content.

In other words, the fine-tuned model may be evaluated against the labelled RRC traces and sentence similarity (e.g., see FIG. 9). Performance may be measured by accuracy, compliance, and/or latency. Deviations may be analyzed, and gaps may be addressed through iterative refinements. In the absence of ground-truth (i.e., labelled) traces, a reward model (e.g., the reward model 533 described above) may be used to quantify the "goodness" of a given RRC reply. For example, the reward model may use the delay in a UE RRC reply as a proxy for the validity of the response generated by the model.

In block 607, after the fine-tuning, the machine-learning-based language model is refined or updated for optimizing the downlink radio resource control messages generated by the machine-learning-based language model. The refinement is performed by using a reinforcement learning algorithm for the optimization, and a reward model configured to assign one or more rewards for guiding the reinforcement learning algorithm. For example, the reinforcement learning algorithm may comprise a proximal policy optimization (PPO) algorithm. Alternatively, any other type of reinforcement learning algorithm may be used. The refined machine-learning-based language model may refer to the RL model 535 described above.

The reinforcement learning algorithm helps to discover better RRC replies (DL RRC messages) to RRC requests (UL RRC messages) that may not be seen in the dataset used for the fine-tuning.

The one or more rewards may represent a similarity score between an output generated by the machine-learning-based language model and a ground-truth token (see the first option described above with reference to FIG. 5). The ground-truth token may represent a correct downlink radio resource control message.

Alternatively, the one or more rewards may be related to network performance (see the second option described above with reference to FIG. 5). For example, the one or more rewards may be related to at least one of: a successful connection rate, an average cell throughput, a latency, a packet loss rate, a handover success ratio, a time duration taken by the machine-learning-based language model for generating an output message, a time duration taken by a user device to process a received message and prepare a response, or a time duration for receiving the response from the user device.

The refinement may further comprise using a Kullback-Leibler divergence penalty component for maintaining stability of the machine-learning-based language model during the refinement.

Blocks 604 to 607 may be performed iteratively until the performance of the model fulfils a performance criterion (e.g., until the performance is above a threshold).

In block 608, after the refinement is completed, the (final) machine-learning-based language model may be deployed or transmitted to a radio access network node (e.g., to a CU 108 or a base station 104) for processing radio resource control messages (e.g., for real-time RRC message processing).

FIG. 7 illustrates a flow chart according to an example embodiment of a method (e.g., a computer-implemented method) for tokenization and sequence generation from RRC messages. The method of FIG. 7 may be performed by an apparatus 1200 depicted in FIG. 12, or by an apparatus 1300 depicted in FIG. 13.

The method of FIG. 7 may be performed in block 401 of FIG. 4, or in block 602 of FIG. 6.

Referring to FIG. 7, in block 701, one or more fields are extracted from each radio resource control message of the uplink radio resource control messages and the corresponding downlink radio resource control messages.

In block 702, the one or more fields are linearized into a textual representation indicative of a meaning of the radio resource control message.

Each complete RRC message, whether a request or a response, is composed of multiple fields containing specific parameters and information elements as defined by the 5G NR standards. These fields are systematically extracted and linearized into a flat text representation while preserving their hierarchical and semantic relationships. The linearized text forms a "sentence," which is defined herein as a single, coherent textual representation that constitutes a complete semantic unit encapsulating the entire meaning of the RRC message.

In block 703, a sequence of tokens suitable for processing by the machine-learning-based language model is constructed, wherein the sequence of tokens is constructed by tokenizing the textual representation using a byte pair encoding (BPE) tokenizer.

BPE is a subword tokenization technique that balances word-level and character-level representations. It effectively handles out-of-vocabulary words and reduces the vocabulary size by representing common sequences of characters or bytes as single tokens.

The term "sequence" refers to the ordered set of tokens resulting from this process. This method ensures that the structural and contextual information within the RRC message fields is maintained in the token sequence, enabling the language model to learn and understand the intricate dependencies between different fields.

By defining the "sequence" in this manner, both the syntactic and semantic content of RRC messages are captured in a format amenable to machine learning. This allows efficient application of language models to protocol message handling in telecommunications systems.

A sentence represented as a sequence of tokens X = {x₁, x₂, ..., x_{S} } may be obtained using the BPE tokenizer.

The target sentence corresponding to X, represented as Y = {*y*₁*, y₂,* ..., *y_{T}*}, may also be tokenized using the BPE tokenizer.

The sentence generated by the model during inference, $Y ′ = \left\{{y}_{1}^{′},{y}_{2}^{′},…,{y}_{T ′}^{′}\right\}$, may be obtained by decoding the output tokens.

Herein S denotes the number of tokens in the input sequence X after the BPE tokenization, T represents the number of tokens in the target sequence Y, and T' stands for the number of tokens in the model-generated output sequence Y' during inference. These parameters indicate the respective lengths of the input, target, and output token sequences.

An example of BPE tokenization of an RRC message is presented in the following. To illustrate the tokenization process, consider the following part of an RRC message, which is expressed in human-readable abstract syntax notation one (ASN.1) encoding:

```
 measResults {
       measld 1,
       measResultServingCell {
              servCellld 0,
              rsrpResult 50,
               rsrqResult -10
               }
 }
```

The hierarchical message structure may be converted into a linear text sentence as follows: "measResults measld 1 measResultServingCell servCellld 0 rsrpResult 50 rsrqResult -10"

Initial split into characters:
['m', 'e', 'a', 's', 'R', 'e', 's', 'u', 'l' 't', s' 'm', 'e', 'a', 's','I' 'd','1' 'm', 'e', 'a', 's' 'R', 'e', s' 'u','I' ...]

Initialize the tokenizer by Iterative Merging of Frequent Pairs of Characters:
1. Merge 'm' and 'e' → 'me', if 'm' and 'e' Frequent Pairs
2. Merge 'me' and 'as' → 'meas',if 'me' and 'as' Frequent Pairs
3. Merge 'Resul' and 't' → 'Result'
4. Merge 'meas' and 'Result' → 'measResult'
5. Continue merging for other terms like 'Serving', 'Cell', 'measld', 'rs','rp','rq' 'Result'

Final sentence split to:
['me', 'as', 'Results' , 'meas', 'ld', ", '1', 'meas', 'Result', 'Serving', 'Cell', 'serv', 'Cell', "Id", ", '0', 'rs', 'rp', 'Result', ", '50', 'rs', 'rq', 'Result', '-', '10']

Each token may then be mapped to a unique token identifier (ID) from the tokenizer's vocabulary, creating a sequence of IDs that the language model can process. An example of this mapping is presented in Table 1 below.

**Table 1. Example of token and token ID lookup table**

| **Token** | **Token ID** | **Token** | **Token ID** |
|---|---|---|---|
| 'me' | 1047 | 'Serving' | 110058 |
| 'as' | 288 | 'Cell' | 5346 |
| 'Results' | 12928 | 'serv' | 2096 |
| 'meas' | 9802 | '0' | 15 |
| 'Id' | 906 | 'rs' | 15181 |
| "(Space here) | 220 | 'rp' | 49866 |
| '1' | 16 | '50' | 1434 |
| 'Result' | 2769 | 'rq' | 116596 |
| '10' | 702 | '-' | 533 |

Each token corresponds to meaningful subword(s) or word(s) derived from the RRC message fields. This token sequence retains the semantic relationships and is suitable for processing by the language model. The sequence after tokenization may be, for example:
[1047, 288, 12928, 9802, 906, 220, 16, 9802, 2769, 110058, 5346, 2096, 5346, 906, 220, 15, 15181, 49866, 2769, 220, 1434, 15181, 116596, 2769, 533, 702]

For example, Llama's tokenizer, which may be initialized based on BPE, may be utilized to tokenize the input sentences. The tokens and their corresponding token IDs may be mapped on a one-to-one basis, utilizing the token IDs as inputs for the large language model. This ensures seamless integration with Llama.

FIG. 8 illustrates the training and inference procedure of the language model according to an example embodiment. In this example embodiment, low-rank adaptation (LoRA) may be used to reduce memory usage during the fine-tuning phase of large language models (e.g., at a base station). By integrating LoRA, the base model's weights can be efficiently adjusted with minimal computational overhead, thus conserving resources. This approach allows to maintain performance while operating within the constraints of the base station's computing capabilities.

FIG. 8 details a structured LLM-based training and inference process optimized for handling RRC messages (e.g., in 5G). The procedure starts with an input sentence 801 derived from a linearized RRC message (e.g., an uplink RRC message), preserving the syntactic and semantic relationships to streamline RRC protocol message processing.

During the forward pass 802, byte pair encoding (BPE) tokenizes the input sentence 801 into standardized-length sequences, which are then processed by the fine-tuned model *π_{θref}.* LoRA-adjusted weights supplement base weights with low-rank matrices, enhancing model adaptability. Cross-entropy loss quantifies the variance between predicted and actual sequences.

In the backward pass 803, gradients for LoRA parameters are computed via backpropagation, guiding weight adjustments to minimize prediction errors. The Adam optimizer refines LoRA-specific parameters, iterating to align model performance with expected RRC responses.

The final output sentence 804 represents the generated response for RRC message handling. Reinforcement learning may be used to further optimize the model by evaluating inferred outputs against actual responses, ensuring accuracy and contextual relevance for telecommunications applications.

FIG. 9 illustrates an example of a sentence similarity comparison for evaluating the performance of the fine-tuned machine-learning-based language model. For example, the sentence similarity comparison may be performed in block 606 of FIG. 6.

To quantitatively assess the semantic similarity between the generated output sentences *Y'*^{{(*i*)}} and the target sentences *Y*^{{(*i*)}}, a sentence similarity evaluation technique based on BERT embeddings and cosine similarity may be utilized.

BERT is a pre-trained language model that uses the bidirectional transformer encoder-only to understand the context of words by considering their surrounding words in both directions. Pre-trained on tasks like Masked Language Modelling (predicting masked words) and Next Sentence Prediction (determining sentence relationships), BERT generates dynamic, context-dependent word embeddings. This enables it to effectively capture semantic meanings, making it useful for tasks like assessing sentence similarity.

For each sample i in the dataset, the target sentence *Y*^{(*i*)} comprises the reference sentence provided in the dataset, and the generated sentence *Y*^{(*i*)} comprises the output produced by the fine-tuned model π_{θ_{ref}} given input *X*^{(*i*)}.

A pre-trained BERT model 901 (denoted as BERT_{ϕ}) with fixed parameters ϕ may be used to obtain contextual embeddings for each token in the sentences.

For the tokenization, both sentences *Y*^{(*i*)} and *Y'*^{(*i*)} may be tokenized into subword units compatible with BERT's tokenizer.

For *Y*^{(*i*)} and *Y'*^{(*i*)}, the embedding extraction may be performed as follows: ${E}^{\left(i\right)} = {BERT}_{ϕ} \left({Y}^{\left(i\right)}\right) = \left[{e}_{1}^{\left(i\right)},{e}_{2}^{\left(i\right)},…,{e}_{{T}^{\left(i\right)}}^{\left(i\right)}\right] , E {′}^{\left(i\right)} = {BERT}_{ϕ} \left(Y{′}^{\left(i\right)}\right) = \left[e{′}_{1}^{\left(i\right)},e{′}_{2}^{\left(i\right)},…,e{′}_{T {′}^{\left(i\right)}}^{\left(i\right)}\right]$

To obtain fixed-size sentence embeddings from the token embeddings, a pooling operation may be applied: ${u}^{\left(i\right)} = \frac{1}{{T}^{\left(i\right)}} {\sum }_{t = 1}^{{T}^{\left(i\right)}} {e}_{t}^{\left(i\right)} , {v}^{\left(i\right)} = \frac{1}{T {′}^{\left(i\right)}} {\sum }_{t = 1}^{T {′}^{\left(i\right)}} e {′}_{t}^{\left(i\right)}$

The cosine similarity between the pooled sentence embeddings *u*^{(*i*)} and *v*^{(*i*)} may be calculated as: $Cosine {Similarity}^{\left(i\right)} = {Z}^{\left(i\right)} = cos \left({θ}^{\left(i\right)}\right) = \frac{{u}^{\left(i\right)} ⋅ {v}^{\left(i\right)}}{\left|{u}^{\left(i\right)}\right| \left|{v}^{\left(i\right)}\right|}$ where *u*^{(*i*)} *· v*^{(*i*)} is dot product of the two vectors, and |*u*^{(*i*)}| and |*v*^{(*i*)}| are the Euclidean norms (magnitudes) of the vectors.

The cosine similarity score 900 (Cosine Similarity^{(*i*)}) may range from -1 to 1. Cosine Similarity^{(*i*)} = 1 means that the sentences are identical in semantic content. Cosine Similarity^{(*i*)} = 0 means that the sentences are orthogonal, sharing no semantic similarity. Cosine Similarity^{(*i*)} = -1 means that the sentences are diametrically opposed in meaning.

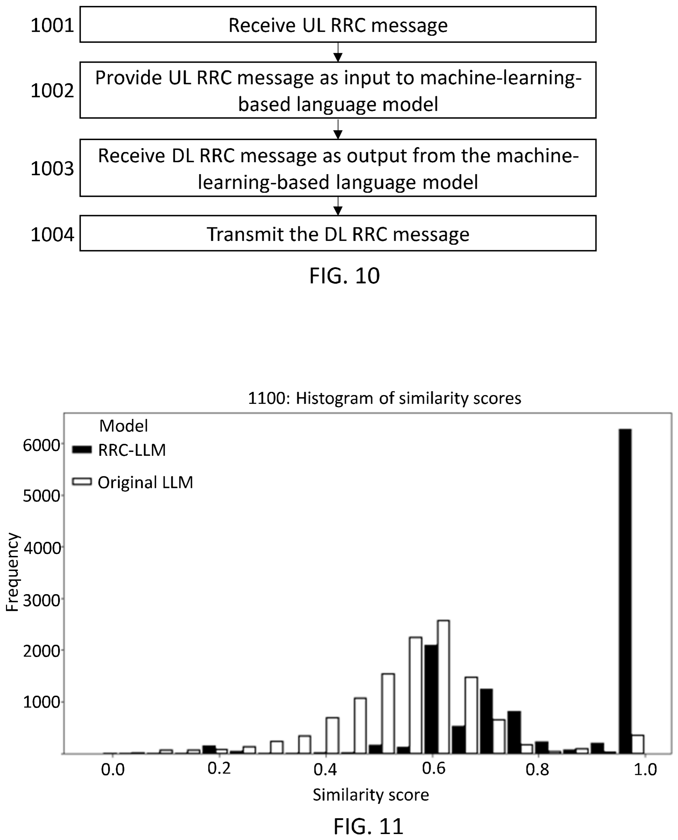

FIG. 10 illustrates a flow chart according to an example embodiment of a method (e.g., a computer-implemented method) for using a fine-tuned machine-learning-based language model for processing RRC messages. The method of FIG. 10 may be performed by an apparatus 1300 depicted in FIG. 13. For example, the apparatus 1300 may be an apparatus such as, or comprising, or comprised in, a radio access network node (e.g., a central unit 108 of a disaggregated base station, or a monolithic base station 104 without a CU-DU split).

Referring to FIG. 10, in block 1001, an uplink radio resource control message is received from a user device (i.e., UE).

In block 1002, the uplink radio resource control message is provided as an input to a machine-learning-based language model that is fine-tuned (e.g., according to the method of FIG. 4 or the method of FIG. 6) for processing uplink radio resource control messages and generating corresponding downlink radio resource control messages.

In block 1003, a downlink radio resource control message is received as an output from the machine-learning-based language model based on the uplink radio resource control message.

In block 1004, the downlink radio resource control message is transmitted to the user device as a response to the uplink radio resource control message. The downlink radio resource control message may be related to at least one of: connection management (e.g., establishing, maintaining or releasing a connection between a UE and a network), mobility management (e.g., a handover command or cell switch command to the UE), radio bearer management (e.g., setting up, reconfiguring, or releasing radio bearers for data transmission to or from the UE), paging (e.g., notifying the UE about incoming calls or data sessions), or a radio resource control state transition (e.g., for switching the UE between RRC_CONNECTED state, RRC_INACTIVE state, and RRC_IDLE state).

For example, the uplink RRC message may comprise a radio resource control setup request message, and the downlink RRC message may comprise a corresponding radio resource control setup message.

As another example, the uplink RRC message may comprise a radio resource control connection re-establishment request, and the downlink RRC message may comprise a corresponding radio resource control connection re-establishment message.

As another example, the uplink RRC message may comprise a radio resource control measurement report, and the downlink RRC message may comprise a corresponding radio resource control reconfiguration message.

Alternatively, or additionally, the uplink RRC message and the downlink RRC message may comprise any other RRC message pair (e.g., as listed in 3GPP TS 38.331).

FIG. 11 illustrates a distribution 1100 of similarity scores for the original LLM (before the fine-tuning) and the fine-tuned and refined LLM model (RRC-LLM). The white segments represent the original LLM, while the black segments depict the fine-tuned and refined RRC-LLM model.

For obtaining the results shown in FIG. 11, an analysis of the overall sentence similarity distribution was performed for both the fine-tuned and refined RRC-LLM and the original LLM, focusing on performance across all samples irrespective of response. The comparative analysis of inference results highlights several key differences between the two models, particularly in response accuracy and error patterns.

Firstly, regarding similarity peaks, the original LLM model's similarity distribution features one main peak around 0.6, indicating frequent generation of mid-similarity responses that moderately align with the expected protocol format, but often contain errors or irrelevant content. The RRC-LLM model, after fine-tuning, introduces an additional peak at a higher similarity score of 0.8-1.0, creating a two-peak distribution around 0.6, and 1.0. This additional peak suggests improved alignment with the intended response format, indicating that fine-tuning led to more high-similarity outputs.

Secondly, the RRC-LLM model exhibits a substantial clustering around higher similarity scores (up to 0.8), reflected by a wider spread in its distribution and an increased peak in the histogram. This indicates that fine-tuning has enhanced the model's ability to match the protocol format more closely, reducing the prevalence of human language descriptions and enhancing structural accuracy. Conversely, the original LLM model has a narrower distribution with the highest scores around 0.5, indicating difficulty in achieving high similarity even in optimal cases, likely due to reliance on human language descriptions (see Table 3).

As shown in Table 2 below, in the high-similarity comparison, the fine-tuned RRC-LLM model demonstrates strong alignment with the required protocol format, providing a structured response that accurately reflects the real protocol message with minimal human language descriptors. Temporal discrepancies are minimal and remain within the decision-making time slots, making this response appropriate for output to UE. This performance illustrates the RRC-LLM model's effectiveness in replicating protocol structures with high accuracy.

**Table 2. High-similarity LLM-based RRC reply**

| **Ground-truth token: RRC Message** | **RRC-LLM (similarity = 0.9991)** |
|---|---|
| Time: 2024-04-15 11:34:38.469892 | Time: 2024-04-15 11:34:38.469982 |
| Message name: rrcSetup | Message name: rrcSetup |
| Interface: F1_E1 | Interface: F1_E1 |
| Protocol: nrRrc | Protocol: nrRrc |
| Time diff: 0000:00:00.001898 | Time diff: 0000:00:00.001988 |
| Message body: DL-CCCH-Message : { | Message body: DL-CCCH-Message : { |
| message c1 : rrcSetup : { | message c1 : rrcSetup : { |
| rrc-TransactionIdentifier 0, | rrc-Transactionldentifier 0, |
| critical Extensions rrcSetup : { | critical Extensions rrcSetup : { |
| radioBearerConfig { | radioBearerConfig { |
| srb-ToAddModList{ | srb-ToAddModList { |
| { | { |
| srb-Identity 1 | srb-Identity 1 |
| } | } |
| } | } |
| ··· | ··· |

Both models exhibit a high frequency of responses around the 0.6 similarity mark. The original LLM model's low-similarity responses frequently contain "no response" errors or human-language descriptions that do not align with the expected structured protocol output.

**Table 3. Low similarity LLM-based RRC reply (original LLM model)**

| **Ground-truth token: RRC Message** | **Inference with original LLM (Similarity=0.68)** |
|---|---|
| Time: 2024-04-15 11:33:10.690388 | It looks like there's another RRC reconfiguration |
| Message name: rrcRelease | complete message being sent! |
| Interface: F1_E1 | Time: 2024-04-15 11:33:00.243997 |
| Protocol: nrRrc | Message name: rrcReconfigurationComplete |
| Time diff: 0000:00:10.633832 | Interface: F1_E1 |
| Message body: DL-DCCH-Message : { | Protocol: nrRrc |
| message c1 : rrcRelease : { | Time diff: 0000:00:00.187441 |
| rrc-Transactionldentifier 0, | Message body: UL-DCCH-Message : { |
| critical Extensions rrcRelease : { | message c1 : rrcReconfigurationComplete : { |
| } | rrc-Transactionldentifier 3, |
| } | criticalExtensions |
| } | rrcReconfigurationComplete : { |
| | } |
| | } |
| | } |
| | ··· |

For low similarity (as shown in Table 3), the original LLM model frequently introduces extensive human natural language content to describe the response protocol. Although the output approximates the correct structural layout, it contains inaccuracies in protocol fields and errors in the direction of message flow. This outcome is consistent with the original model's pre-training on mixed human language and protocol-related documents.

In some example embodiments, timestamps from uplink RRC messages may be used as input features. This serves as an efficient data augmentation technique that facilitates training and also avoids errors caused by out-of-order input messages at training time.

Predicting the timestamps of the output downlink RRC messages is not the goal of the trained model, but this behaviour is included in the results for engineering convenience and to aid in output display. For evaluation purposes, the impact of these predicted timestamps on similarity scores is negligible. In high-similarity examples, where timestamps are the only difference, their influence on similarity is less than 0.1%, indicating that timestamp variations do not significantly impact the model's performance assessment. This further validates the RRC-LLM model's capability to replicate the protocol structure accurately without being affected by timestamp discrepancies.

In conclusion, fine-tuning the RRC-LLM model introduced a high-similarity peak, signifying improved protocol adherence, and expanded similarity score diversity. This adaptation allows the RRC-LLM model to better match response needs, particularly in generating responses that closely align with protocol specifications. The analysis highlights the RRC-LLM model's enhanced capability in generating accurate, structured protocol responses, demonstrating superiority over the general-purpose LLMs (e.g., Llama) in structured protocol tasks.

The blocks and related functions described above by means of FIGS. 4, 6, 7 and 10 are in no absolute chronological order, and some of them may be performed simultaneously or in an order differing from the described one. Other functions can also be executed between them or within them, and/or other rules applied. Some of the blocks or part of the blocks can also be left out or replaced by a corresponding block or part of the block.

FIG. 12 illustrates an example of an apparatus 1200 comprising means for causing the apparatus 1200 to perform one or more of the example embodiments described above (e.g., the method of FIG. 4, 6, and/or 7). The apparatus 1200 may be, or comprise, or be comprised in, a computer or any other computing device suitable for training machine learning models. In other words, the apparatus 1200 may comprise a machine learning trainer entity used to train machine learning models.

The apparatus 1200 may comprise, for example, a circuitry or a chipset applicable for realizing one or more of the example embodiments described above. The apparatus 1200 may be an electronic device or computing system comprising one or more electronic circuitries. The apparatus 1200 may comprise a fine-tuning circuitry (or training circuitry) 1210 such as at least one processor, and at least one memory 1220 storing instructions 1222 which, when executed by the at least one processor, cause the apparatus 1200 to carry out one or more of the example embodiments described above. Such instructions 1222 may, for example, include computer program code (software). The at least one processor and the at least one memory storing the instructions may provide the means for providing or causing the performance of any of the methods and/or blocks described above.

The processor is coupled to the memory 1220. The processor is configured to read and write data to and from the memory 1220. The memory 1220 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1220 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1220 or, alternatively or additionally, they may be received, by the apparatus, via an electromagnetic carrier signal and/or may be copied from a physical entity such as a computer program product. Execution of the computer readable instructions causes the apparatus 1200 to perform one or more of the functionalities described above.

The memory 1220 may be implemented using any suitable data storage technology, such as semiconductor-based memory devices, flash memory, magnetic memory devices and systems, optical memory devices and systems, fixed memory and/or removable memory.

The apparatus 1200 may further comprise or be connected to a communication interface 1230 comprising hardware and/or software for realizing communication connectivity according to one or more communication protocols. The communication interface 1230 may comprise at least one transmitter (Tx) and at least one receiver (Rx) that may be integrated to the apparatus 1200 or that the apparatus 1200 may be connected to. The communication interface 1230 may provide means for performing some of the blocks and/or functions (e.g., transmitting and receiving) for one or more example embodiments described above. The communication interface 1230 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1230 provides the apparatus with communication capabilities to communicate in the wireless communication network. The communication interface 1230 may, for example, provide a radio, cable or fiber interface to one or more base stations 104, 104B, 104C, 104D of a radio access network, and/or to a central entity such as an SMO 220.

It is to be noted that the apparatus 1200 may further comprise various components not illustrated in FIG. 12. The various components may be hardware components and/or software components.

FIG. 13 illustrates an example of an apparatus 1300 comprising means for performing one or more of the example embodiments (e.g., the method of FIG. 4, 6, 7 and/or 10) described above. For example, the apparatus 1300 may be an apparatus such as, or comprising, or comprised in, a radio access network node (e.g., a central unit 108 of a disaggregated base station, or a monolithic base station 104 without a CU-DU split).

The apparatus 1300 may comprise, for example, a circuitry or a chipset applicable for realizing one or more of the example embodiments described above. The apparatus 1300 may be an electronic device comprising one or more electronic circuitries. The apparatus 1300 may comprise a communication control circuitry 1310 such as at least one processor, and at least one memory 1320 storing instructions 1322 which, when executed by the at least one processor, cause the apparatus 1300 to carry out one or more of the example embodiments described above. Such instructions 1322 may, for example, include computer program code (software). The at least one processor and the at least one memory storing the instructions may provide the means for providing or causing the performance of any of the methods and/or blocks described above.

The processor is coupled to the memory 1320. The processor is configured to read and write data to and from the memory 1320. The memory 1320 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1320 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1320 or, alternatively or additionally, they may be received, by the apparatus, via an electromagnetic carrier signal and/or may be copied from a physical entity such as a computer program product. Execution of the computer readable instructions causes the apparatus 1300 to perform one or more of the functionalities described above.

The memory 1320 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 1300 may further comprise or be connected to a communication interface 1330, such as a radio unit, comprising hardware and/or software for realizing communication connectivity with one or more wireless communication devices according to one or more communication protocols. The communication interface 1330 comprises at least one transmitter (Tx) and at least one receiver (Rx) that may be integrated to the apparatus 1300 or that the apparatus 1300 may be connected to. The communication interface 1330 may provide means for performing some of the blocks and/or functions (e.g., transmitting and receiving) for one or more example embodiments described above. The communication interface 1330 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1330 provides the apparatus with radio communication capabilities to communicate in the wireless communication network. The communication interface may, for example, provide a radio interface to one or more UEs 100, 102. The apparatus 1300 may further comprise or be connected to another interface towards a core network 110, such as the network coordinator apparatus or AMF, and/or to other access nodes of the wireless communication network.

The apparatus 1300 may further comprise a scheduler 1340 that is configured to allocate radio resources. The scheduler 1340 may be configured along with the communication control circuitry 1310 or it may be separately configured.

It is to be noted that the apparatus 1300 may further comprise various components not illustrated in FIG. 13. The various components may be hardware components and/or software components.

As used in this application, the term "circuitry" may refer to one or more or all of the following: a) hardware-only circuit implementations (such as implementations in analog, digital and/or quantum circuitry); and b) combinations of hardware circuit(s) and software, such as (as applicable): i) a combination of analog, digital and/or quantum hardware circuit(s) with software/firmware and ii) any or all portions of hardware processor(s) (including digital and/or quantum processor(s)) with software, and memory(ies) that work together to cause an apparatus, such as a mobile device, computing device, or server, to perform various functions; and c) any or all portions of hardware circuit(s), such as microprocessor(s), processor(s) and/or quantum processor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

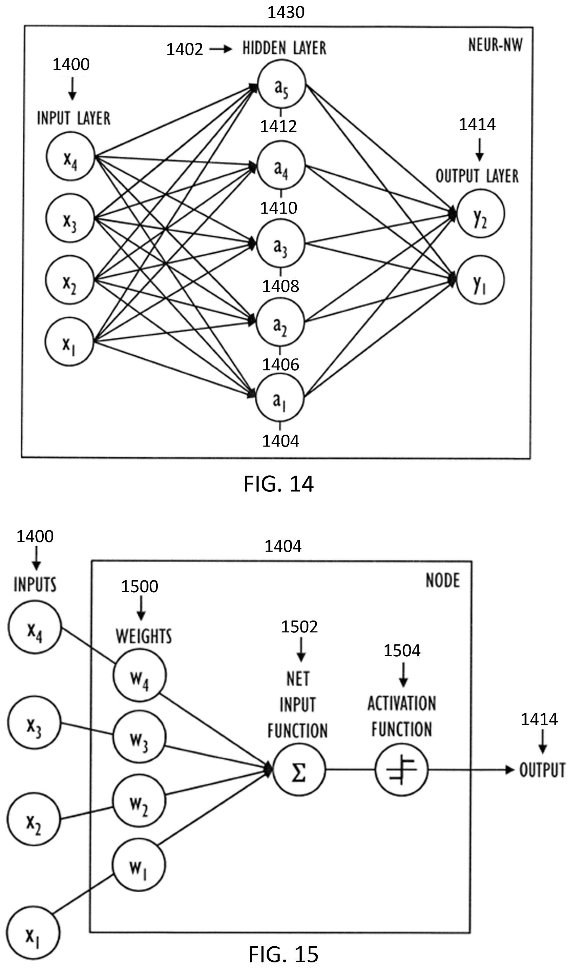

FIG. 14 illustrates an example of an artificial neural network 1430 with one hidden layer 1402, and FIG. 15 illustrates an example of a computational node 1404. However, it should be noted that the artificial neural network 1430 may also comprise more than one hidden layer 1402. The artificial neural network 1430 is one example of the machine-learning-based language model 200, 314, 322, 535 or the reward model 533 described above.

An artificial neural network (ANN) 1430 comprises a set of rules that are designed to execute tasks such as regression, classification, clustering, and pattern recognition. The ANN may achieve such objectives with a learning/training procedure, where they are shown various examples of input data, along with the desired output. This way, the ANN learns to identify the proper output for any input within the training data manifold. Learning/training by using labels is called supervised learning and learning without labels is called unsupervised learning.

Deep learning (also known as deep structured learning or hierarchical learning) is part of a broader family of machine learning methods based on the layers used in the artificial neural network. A deep neural network (DNN) 1430 is an artificial neural network comprising multiple hidden layers 1402 between the input layer 1400 and the output layer 1414. Training of DNN allows it to find the correct mathematical manipulation to transform the input into the proper output, even when the relationship is highly non-linear and/or complicated. Deep learning may require a large amount of input data.

A given hidden layer 1402 comprises nodes 1404, 1406, 1408, 1410, 1412, where the computation takes place. As shown in FIG. 15, a given node 1404 combines input data 1400 with a set of coefficients, or weights 1500, that either amplify or dampen that input 1400, thereby assigning significance to inputs 1400 with regard to the task that the algorithm is trying to learn. The input-weight products are added 1502 and the sum is passed through an activation function 1504, to determine whether and to what extent that signal should progress further through the neural network 1430 to affect the ultimate outcome, such as an act of classification. In the process, the neural network learns to recognize correlations between certain relevant features and optimal results.

In the case of classification, the output of a DNN 1430 may be considered as a likelihood of a particular outcome. In this case, the number of layers 1402 may vary proportional to the number of the used input data 1400. However, when the number of input data 1400 is high, the accuracy of the outcome 1414 is more reliable. On the other hand, when there are fewer layers 1402, the computation might take less time and thereby reduce the latency. However, this highly depends on the specific DNN architecture and/or the computational resources available.

Initial weights 1500 of the model can be set in various alternative ways. During the training phase, they may be adapted to improve the accuracy of the process based on analyzing errors in decision-making. Training a model is basically a trial-and-error activity. In principle, a given node 1404, 1406, 1408, 1410, 1412 of the neural network 1430 makes a decision (input*weight) and then compares this decision to collected data to find out the difference to the collected data. In other words, it determines the error, based on which the weights 1500 are adjusted. Thus, the training of the model may be considered a corrective feedback loop.

For example, a neural network model may be trained using a stochastic gradient descent optimization algorithm, for which the gradients are calculated using the backpropagation algorithm. The gradient descent algorithm seeks to change the weights 1500, so that the next evaluation reduces the error, meaning that the optimization algorithm is navigating down the gradient (or slope) of error. It is also possible to use any other suitable optimization algorithm, if it provides sufficiently accurate weights 1500. Consequently, the trained parameters of the neural network 1430 may comprise the weights 1500.

In the context of an optimization algorithm, the function used to evaluate a candidate solution (i.e., a set of weights) is referred to as the objective function. With neural networks, where the target is to minimize the error, the objective function may be referred to as a cost function or a loss function. In adjusting weights 1500, any suitable method may be used as a loss function. Some examples of a loss function are mean squared error (MSE), maximum likelihood estimation (MLE), and cross entropy.

As for the activation function 1504 of the node 1404, it defines the output 1414 of that node 1404 given an input or set of inputs 1400. The node 1404 calculates a weighted sum of inputs, perhaps adds a bias, and then makes a decision as "activate" or "not activate" based on a decision threshold as a binary activation or using an activation function 1504 that gives a nonlinear decision function. Any suitable activation function 1504 may be used, for example sigmoid, rectified linear unit (ReLU), normalized exponential function (softmax), sotfplus, tanh, etc. In deep learning, the activation function 1504 may be set at the layer level and applies to all neurons (nodes) in that layer. The output 1414 is then used as input for the next node and so on until a desired solution to the original problem is found.

It will be understandable to a person skilled in the art that, as technology advances, the proposed concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus (1200) comprising at least one processor (1210), and at least one memory (1220) storing instructions (1222) that, when executed by the at least one processor (1210), cause the apparatus (1200) at least to:
collect a labelled dataset (324) for fine-tuning a machine-learning-based language model (322),
wherein the labelled dataset (324) comprises multiple pairs of uplink radio resource control messages and corresponding downlink radio resource control messages; and
fine-tune the machine-learning-based language model (322) based on the labelled dataset (324) for processing the uplink radio resource control messages and generating the corresponding downlink radio resource control messages.

2. The apparatus (1200) of claim 1, wherein the corresponding downlink radio resource control messages are related to at least one of:
a connection setup,
a handover, or
a radio resource control state transition.

3. The apparatus (1200) of any preceding claim, wherein the collection of the labelled dataset (324) comprises:
extracting one or more fields from each radio resource control message of the uplink radio resource control messages and the corresponding downlink radio resource control messages;
linearizing the one or more fields into a textual representation indicative of a meaning of the radio resource control message; and
constructing a sequence of tokens suitable for processing by the machine-learning-based language model (322), wherein the sequence of tokens is constructed by tokenizing the textual representation using a byte pair encoding tokenizer.

4. The apparatus (1200) of any preceding claim, wherein the fine-tuning of the machine-learning-based language model (322) is further based on one or more messages from a core network (110).

5. The apparatus (1200) of any preceding claim, further being caused to:
provide one or more uplink radio resource control messages as an input to the machine-learning-based language model (322) after the fine-tuning; and
receive one or more downlink radio resource control messages as an output from the machine-learning-based language model (322) based on the one or more uplink radio resource control messages.

6. The apparatus (1200) of claim 5, further being caused to:
evaluate a performance of the machine-learning-based language model (322) by comparing the one or more uplink radio resource control messages to the uplink radio resource control messages comprised in the labelled dataset used for the fine-tuning of the machine-learning-based language model (322).

7. The apparatus (1200) of any preceding claim, further being caused to:
refine the machine-learning-based language model (322) after the fine-tuning for optimizing downlink radio resource control messages generated by the machine-learning-based language model (322),
wherein the refinement is performed by using a reinforcement learning algorithm (534) for the optimization, and a reward model (533) configured to assign one or more rewards for guiding the reinforcement learning algorithm (534).

8. The apparatus (1200) of claim 7, wherein the one or more rewards represent a similarity score (900) between an output generated by the machine-learning-based language model (322), and a ground-truth token,
wherein the ground-truth token represents a correct downlink radio resource control message.

9. The apparatus (1200) of claim 7, wherein the one or more rewards are related to at least one of:
a successful connection rate,
an average cell throughput,
a latency,
a packet loss rate,
a handover success ratio,
a time duration taken by the machine-learning-based language model (322) for generating an output message,
a time duration taken by a user device (100, 102) to process a received message and prepare a response, or
a time duration for receiving the response from the user device (100, 102).

10. The apparatus (1200) of any of claims 7 to 9, wherein the refinement further comprises using a Kullback-Leibler divergence penalty component (536) for maintaining stability of the machine-learning-based language model (322) during the refinement.

11. An apparatus (1300) comprising at least one processor (1310), and at least one memory (1320) storing instructions (1322) that, when executed by the at least one processor (1310), cause the apparatus (1300) at least to:
receive an uplink radio resource control message from a user device (100, 102);
provide the uplink radio resource control message as an input to a machine-learning-based language model (200, 322) that is fine-tuned for processing uplink radio resource control messages and generating corresponding downlink radio resource control messages;
receive a downlink radio resource control message as an output from the machine-learning-based language model (200, 322) based on the uplink radio resource control message; and
transmit the downlink radio resource control message to the user device (100, 102) as a response to the uplink radio resource control message.

12. A method comprising:
collecting (401, 502) a labelled dataset for fine-tuning a machine-learning-based language model,
wherein the labelled dataset comprises multiple pairs of uplink radio resource control messages and corresponding downlink radio resource control messages; and
fine-tuning (402, 603) the machine-learning-based language model based on the labelled dataset for processing the uplink radio resource control messages and generating the corresponding downlink radio resource control messages.

13. A method comprising:
receiving (1001) an uplink radio resource control message from a user device;
providing (1002) the uplink radio resource control message as an input to a machine-learning-based language model that is fine-tuned for processing uplink radio resource control messages and generating corresponding downlink radio resource control messages;
receiving (1003) a downlink radio resource control message as an output from the machine-learning-based language model based on the uplink radio resource control message; and
transmitting (1004) the downlink radio resource control message to the user device as a response to the uplink radio resource control message.

14. A non-transitory computer readable medium comprising program instructions which, when executed by an apparatus (1200), cause the apparatus (1200) to perform at least the following:
collecting a labelled dataset (324) for fine-tuning a machine-learning-based language model (322),
wherein the labelled dataset (324) comprises multiple pairs of uplink radio resource control messages and corresponding downlink radio resource control messages; and
fine-tuning the machine-learning-based language model (322) based on the labelled dataset (324) for processing the uplink radio resource control messages and generating the corresponding downlink radio resource control messages.

15. A non-transitory computer readable medium comprising program instructions which, when executed by an apparatus (1300), cause the apparatus (1300) to perform at least the following:
receiving an uplink radio resource control message from a user device (100, 102);
providing the uplink radio resource control message as an input to a machine-learning-based language model (200, 322) that is fine-tuned for processing uplink radio resource control messages and generating corresponding downlink radio resource control messages;
receiving a downlink radio resource control message as an output from the machine-learning-based language model (200, 322) based on the uplink radio resource control message; and
transmitting the downlink radio resource control message to the user device (100, 102) as a response to the uplink radio resource control message.

16. A system comprising at least one processor (1210, 1310) and at least one memory (1220, 1320) storing instructions (1222, 1322) that, when executed by the at least one processor (1210, 1310), cause the system to perform at least:
collecting a labelled dataset (324) for fine-tuning a machine-learning-based language model (322),
wherein the labelled dataset (324) comprises multiple pairs of uplink radio resource control messages and corresponding downlink radio resource control messages;
fine-tuning the machine-learning-based language model (322) based on the labelled dataset (324) for processing the uplink radio resource control messages and generating the corresponding downlink radio resource control messages;
receiving an uplink radio resource control message from a user device (100, 102);
providing the uplink radio resource control message as an input to the machine-learning-based language model (322) that is fine-tuned for processing the uplink radio resource control messages and generating the corresponding downlink radio resource control messages;
receiving a downlink radio resource control message as an output from the machine-learning-based language model (322) based on the uplink radio resource control message; and
transmitting the downlink radio resource control message to the user device (100, 102) as a response to the uplink radio resource control message.
